(19) Europäisches Patentamt
European Patent Office
Office européen des brevets

(11) EP 4 183 764 A1

(12) EUROPEAN PATENT APPLICATION

(43) Date of publication:
**24.05.2023 Bulletin 2023/21**

(21) Application number: **21208978.3**

(22) Date of filing: **18.11.2021**

(51) International Patent Classification (IPC):
***C05C 9/00*** *(2006.01)* ***C05G 5/12*** *(2020.01)*
***C05D 3/00*** *(2006.01)* ***C05D 3/02*** *(2006.01)*

(52) Cooperative Patent Classification (CPC):
(C-Sets available)
**C05G 5/12; C05C 9/00; C05C 9/005; C05D 3/00; C05D 3/02** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SABIC Global Technologies, B.V.
4612 PX Bergen op Zoom (NL)**

(72) Inventors:
- **KELLS, Andrew George
Cleveland (GB)**
- **BAG, Nilkamal
Bangalore (IN)**
- **SHARMA, Yogesh Omprakash
Riyadh (SA)**

(74) Representative: **Dehns
St. Bride's House
10 Salisbury Square
London EC4Y 8JD (GB)**

(54) **METHODS OF MAKING UREA CALCIUM SULFATE (UCS) USING HIGH SHEAR MIXING**

(57) A urea calcium sulfate (UCS) fertilizer granule includes urea, calcium sulfate, and a calcium sulfate urea adduct, and is prepared by a continuous process including: (a) combining urea, calcium sulfate, and water to form an aqueous slurry, wherein the urea is solubilized in the aqueous slurry; (b) mixing the aqueous slurry in a high shear mixing apparatus, wherein the high shear mixing apparatus applies a shear of at least 50,000/seconds to the aqueous slurry; and (c) removing at least a portion of the water from the aqueous slurry to form the UCS fertilizer granule. The UCS fertilizer granule includes at least 80% calcium sulfate urea adduct. Methods for making a fertilizer composition including urea calcium sulfate (UCS) fertilizer granules are also described.

EP 4 183 764 A1

(52) Cooperative Patent Classification (CPC): (Cont.)

C-Sets
**C05C 9/00, C05D 3/02;**
**C05C 9/005, C05D 3/00**

## Description

### FIELD OF THE DISCLOSURE

The present disclosure relates to fertilizer compositions including urea calcium sulfate (UCS) granules and to methods for making them, and in particular to USC granules that include at least 80% UCS adduct.

### BACKGROUND OF THE DISCLOSURE

Urea Calcium Sulphate (UCS) has been known as a product since 1933, but to date it has not been commercially scaled-up and manufactured. The following formula shows at least one reaction scheme for forming UCS:

$$\underset{\text{Gypsum}}{CaSO_4 \cdot 2\,H_2O} + \underset{\text{Urea}}{4\,CO(NH_2)_2} = \underset{\text{UCS Adduct}}{CaSO_4 \cdot 4\,CO(NH_2)_2} + \underset{\text{Water}}{2\,H_2O}$$

Successful scale-up of a UCS process would require conditions that achieve conversion of the urea to the urea calcium sulphate adduct on a continuous basis. If the desired adduct conversion is not achieved during the manufacturing process, the unreacted urea and gypsum remain in the final product. Post-manufacturing incomplete conversion may continue in the product handling and bagging stages, leading to deteriorating product quality issues and end-user difficulties.

To date, conventional processes for making UCS (lab and pilot scale) have involved the use of continuous stirred tank reactors (CSTRs), which allow the urea and gypsum to intimately mix and form the desired adduct. One disadvantage of a CSTR process is that it cannot achieve a mixing intensity that is high enough to ensure that the urea and gypsum are intimately mixed to achieve the desired UCS adduct in the final product. If the stirring is not sufficient, portions of gypsum in the mixture remain agglomerated and the gypsum is unavailable for reaction with urea to form the desired adduct.

These and other shortcomings are addressed by aspects of the present disclosure.

### SUMMARY

Aspects of the disclosure relate to a urea calcium sulfate (UCS) fertilizer granule including urea, calcium sulfate, and a calcium sulfate urea adduct. The UCS fertilizer granule is prepared by a continuous process including: (a) combining urea, calcium sulfate, and water to form an aqueous slurry, wherein the urea is solubilized in the aqueous slurry; (b) mixing the aqueous slurry in a high shear mixing apparatus, wherein the high shear mixing apparatus applies a shear of at least 50,000/seconds to the aqueous slurry; and (c) removing at least a portion of the water from the aqueous slurry to form the UCS fertilizer granule. The UCS fertilizer granule includes at least 80% calcium sulfate urea adduct.

Aspects of the disclosure further relate to methods for forming a fertilizer composition, wherein the fertilizer composition includes a plurality of urea calcium sulfate (UCS) fertilizer granules including urea, calcium sulfate, and a calcium sulfate urea adduct. The method includes: (a) combining urea, calcium sulfate, and water to form an aqueous slurry, wherein the urea is solubilized in the aqueous slurry; (b) mixing the aqueous slurry in a high shear mixing apparatus, wherein the high shear mixing apparatus applies a shear of at least 50,000/seconds to the aqueous slurry; and (c) removing at least a portion of the water from the aqueous slurry to form the plurality of UCS fertilizer granules. The plurality of UCS fertilizer granules include at least 80% calcium sulfate urea adduct, and wherein the method is performed as a continuous process.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

FIGS. 1A and 1B are block diagrams illustrating a process and apparatus for forming UCS granules according to aspects of the disclosure.

FIG. 2 is a scanning electron microscopy (SEM) image of a UCS granule formed according to a conventional process including drum granulation and steam injection.

FIG. 3 is a SEM image of a UCS granule formed according to a conventional CSTR process.
FIG. 4 is a SEM image of a UCS granule formed according to a conventional slurry granulation process.
FIG. 5 is a SEM image of a UCS granule formed according to aspects of the present disclosure.

## DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.
Various combinations of elements of this disclosure are encompassed by this disclosure, e.g., combinations of elements from dependent claims that depend upon the same independent claim.
Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.
All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.
As used in the specification and the appended claims, the singular forms "a," "an" and "the" include plural referents unless the context clearly dictates otherwise. Thus, for example, reference to "a UCS granule" includes mixtures of two or more UCS granules.
As used herein, the term "combination" is inclusive of blends, mixtures, alloys, reaction products, and the like.
Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.
As used herein, the terms "about" and "at or about" mean that the amount or value in question can be the designated value, approximately the designated value, or about the same as the designated value. It is generally understood, as used herein, that it is the nominal value indicated $\pm$10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.
Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound

is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

**Continuous Methods for Forming UCS Granules**

The UCS granule formed according to aspects of the disclosure can include a UCS adduct formed from the following reaction:

$$CaSO_4{\cdot}nH_2O+4CO(NH_2)_2 \rightarrow CaSO_4{\cdot}4CO(NH_2)_2+nH_2O,$$

where n is a value from 0 to 2 (e.g., 0, 0.5, 1, 2).

The UCS granule can be produced by using urea in excess of the stoichiometric ratio for production of a UCS adduct (e.g., more than four moles of urea for every one mole of calcium sulfate). The UCS granule produced is stable and can contain elemental nitrogen at concentrations above 27 wt. % (e.g., at least, equal to, or between any two of 27 wt. %, 28 wt. %, 29 wt. %, 30 wt. %, 31 wt. %, 32 wt. %, 33 wt. %, 34 wt. %, 35 wt. %, 36 wt. %, 37 wt. %, 38 wt. %, and 40 wt. %). For example, UCS granules of the present disclosure can include 33, 34, 35, 36, 37, 38, 39, or 40 wt. % elemental nitrogen, 2, 3, 4, or 5 wt. % elemental calcium, and 2, 3, 4, or 5 wt. % elemental sulfur. UCS granules of the present disclosure can include 33 wt. % to 37 wt. % elemental nitrogen, 3 wt. % to 5 wt. % elemental calcium, and 3 wt. % to 5 wt. % elemental sulfur. The UCS fertilizer granule can include 33 wt. % to 35 wt. % elemental nitrogen, 4 wt. % to 5 wt. % elemental calcium, and 4 wt. % to 5 wt. % elemental sulfur. UCS granules of the present disclosure can include 33 wt. %, 34 wt. %, or 35 wt. % elemental nitrogen, 4 wt. % or 5 wt. % elemental calcium, and 4 wt. % or 5 wt. % elemental sulfur. UCS granules of the present disclosure can include 33 wt. % or 34 wt. % elemental nitrogen, 4 wt. % or 5 wt. % elemental calcium, and 4 wt. % or 5 wt. % elemental sulfur. UCS granules of the present disclosure can include 33 wt. % elemental nitrogen, 5 wt. % elemental calcium, and 5 wt. % elemental sulfur. UCS granules of the present disclosure can include 34 wt. % elemental nitrogen, 5.5 wt. % elemental calcium, and 5 wt. % elemental sulfur. In some aspects, the granule does not include phosphorus, potassium, or both. In further aspects, the UCS granule can be a 27-0-0-based fertilizer.

It is desirable for UCS manufacturing processes to have a high UCS adduct conversion rate for both end user performance and manufacturing and storage/transport stability. From the standpoint of end user performance, high UCS adduct conversion allows more urea to be "chemically bound" to the gypsum, slowing the release of urea in the field.

For manufacturing and storage/transport stability sufficient urea adduct conversion is desirable to avoid post-manufacturing reactions in storage/transport. About 60-70% adduct conversion is sufficient to maintain stability. Conventional CSTR manufacturing processes have achieved around 60-70% adduct conversion.

Urea adduct conversion is the ratio of adduct urea to total urea in the composition, and can be determined according to the following formula:

$$\text{Adduct Conversion} = \frac{Urea\ Adduct}{Total\ Urea} * 100\ \%$$

Factors that impact urea adduct conversion include:

- The form of urea: a liquid form promotes interaction with the gypsum and subsequent replacement of the water molecules. A solid/solid reaction is possible but can only be achieved with extreme grinding and pressure conditions.
- Gypsum particle size: the gypsum particle should be small enough to allow the urea interaction to occur. Typical particle sizes are 150 μm or lower. If the particle size is too small gypsum agglomeration can occur.
- Urea/gypsum ratio: the urea/gypsum ratio should be selected to allow the desired adduct conversion. UCS-27 (27-0-0) formulations allow a theoretical 100% adduct conversion; in contrast UCS-33 (33-0-0) formulation can only achieve around 65% adduct conversion due to the excess urea in the formulation.
- Moisture content: if moisture content is too high adduct conversion is reduced. In some aspects an 18-25 wt% moisture range may promote desirable adduct conversion.
- Temperature: elevated temperatures are known to improve adduct conversion rate; in some aspects a temperature of from about 60 °C to about 80 °C is desirable.
- Mixing: the methods described herein are a heterogeneous reaction (solid/liquid); accordingly the rate of adduct conversion is affected by the rate and duration of mixing.

The present disclosure identifies a number of high-intensity mixing technologies that could be used to promote de-agglomeration of the gypsum particles in the reactor and improve UCS adduct conversion. These technologies are also capable of "wet-milling" the raw materials thus reducing the particle size which will promote heterogeneous reactions between the urea and gypsum. In addition, methods for improving UCS adduct conversion may include pre-grinding the gypsum prior to reaction and ultrasonication mixing of the UCS slurry.

Accordingly, aspects of the disclosure relate a urea calcium sulfate (UCS) fertilizer granule including urea, calcium sulfate, and a calcium sulfate urea adduct. With reference to FIGS. 1A and 1B, the UCS fertilizer granule is prepared by a continuous process (10) including: (a) combining (at step 100) urea, calcium sulfate, and water to form an aqueous slurry, wherein the urea is solubilized in the aqueous slurry; (b) mixing (at step 200) the aqueous slurry in a high shear mixing apparatus, wherein the high shear mixing apparatus applies a shear of at least 50,000/seconds (/sec) to the aqueous slurry; and (c) removing (at step 300) at least a portion of the water from the aqueous slurry to form the UCS fertilizer granule. The UCS product including the USC fertilizer granule(s) is formed in the high shear mixing apparatus. The process described herein may be performed as a continuous process, with aqueous slurry 150 continuously introduced into the high shear mixing apparatus 250 and the UCS product 350 continuously removed from the high shear mixing apparatus. At least a portion of the water may then be removed from the UCS product 350 at step (c).

In some aspects the high shear mixing apparatus applies a shear of at least 100,000/sec, or at least 150,000/sec, or at least 200,000/sec, or at least 250,000/sec, or at least 300,000/sec, or at least 350,000/sec, or at least 400,000/sec, or at least 450,000/sec, or at least 500,000/sec, or from 50,000/sec to 1E10/sec, or from 50,000/sec to 1E9/sec, or from 100,000/sec to 1E10/sec, or from 200,000/sec to 1E10/sec, or from 300,000/sec to 1E10/sec, or from 400,000/sec to 1E10/sec, or from 500,000/sec to 1E10/sec, or from 100,000/sec to 1E9/sec, or from 200,000/sec to 1E9/sec, or from 300,000/sec to 1E9/sec, or from 400,000/sec to 1E9/sec, or from 500,000/sec to 1E9/sec.

The UCS fertilizer granule includes at least 80% calcium sulfate urea adduct in some aspects. In other aspects the UCS fertilizer granule includes at least 85%, or at least 86%, or at least 87%, or at least 88%, or at least 89%, or at least 90%, calcium sulfate urea adduct. UCS adduct conversion may be determined by a solvent extraction method. In one aspect the solvent extraction method includes dissolving the UCS fertilizer granule in n-butanol and water. Unreacted (free) urea dissolves in the solvent but not the urea bound in adduct form. Urea conversion can be calculated based on the difference in mass in the sample before and after solvent extraction.

In some aspects the process for making the UCS fertilizer granule includes pre-grinding the calcium sulfate prior to step (a) of combining the urea, calcium sulfate, and water to form an aqueous slurry. The pre-ground calcium sulfate may have an average particle size of from about 100 micron (μm) to about 1 millimeter (mm), or in further aspects from about 100 μm to 500 μm, or from about 100 μm to about 300 μm, or from about 100 μm to about 250 μm, or from about 100 μm to about 200 μm, or from about 125 μm to about 175 μm, or from about 140 μm to about 160 μm, or

about 150 μm.

The calcium sulfate used in the process may include hydrated calcium sulfate, anhydrous calcium sulfate, or a combination thereof.

The high shear mixing apparatus may include a rotor-stator mixer, a colloid mill, a homogenizer, a microfluidizing processor, an ultrasonicator, or a combination thereof. In particular aspects the high shear mixing apparatus includes a rotor-stator mixer, an ultrasonicator, or a combination thereof.

In some aspects the step (b) of mixing the aqueous slurry in a high shear mixing apparatus is performed at a temperature of less than 90 degrees Celsius (°C). In other aspects the step (b) of mixing the aqueous slurry in a high shear mixing apparatus is performed at a temperature of less than 89 °C, less than 88 °C, or at least 70 °C, or from 70 °C to 90 °C.

The step (b) of mixing the aqueous slurry in a high shear mixing apparatus may be performed for a time of less than one hour. In other aspects the step (b) of mixing the aqueous slurry in a high shear mixing apparatus may be performed for a time of less than 45 minutes, or less than 30 minutes, or less than 25 minutes, or less than 20 minutes, or less than 15 minutes, or less than 10 minutes.

In some aspects the USC granule has a particle size of from about 1 mm to about 4 mm, or in further aspects from about 2 mm to about 4 mm.

The step (c) of removing at least a portion of the water from the aqueous slurry in certain aspects includes removing at least 99% of the water from the aqueous slurry. In specific aspects at least 99.1%, or at least 99.2%, or at least 99.3%, or at least 99.4%, or at least 99.5% of the water is removed from the aqueous slurry. The water may be removed by drying the slurry at a temperature of at least 80 °C. In further aspects the slurry is dried at a temperature of from about 80 °C to about 110 °C, or from about 80 °C to about 105 °C, or from about 80 °C to about 100 °C, or from about 80 °C to about 90 °C, or from about 80 °C to about 85 °C. Drying time may in some aspects be at least 5 hours, or at least 6 hours, or at least 7 hours, or at least 8 hours.

Aspects of the disclosure further relate to a fertilizer composition including a plurality of UCS fertilizer granules prepared according to the process described herein. In some aspects the fertilizer composition is free-flowing at room temperature. The determination of whether a composition is free-flowing is a function of various properties including but not necessarily limited to sphericity and hygroscopicity and critical relative humidity (CRH). Each of these properties may be determined according to conventional methods. Sphericity may be determined by rolling a sample of granules over an inclined moving belt. Round granules are collected at the bottom of the belt; distorted or broken granules are collected at the top of the belt. Sphericity value (in %) may be calculated by the formula:

$$\text{Sphericity value (\%)} = \text{True granules (in g)} / (\text{True} + \text{Reject granules (g)}) * 100$$

Free-flowing UCS compositions according to aspects of the disclosure may have a sphericity value of from about 45% to about 60%.

Hygroscopicity is the degree to a material will absorb moisture from the atmosphere and CRH is the atmospheric humidity above which a material will absorb a significant amount of moisture and below which it will not. Hygroscopicity and CRH for the UCS fertilizer composition may be determined according to conventional methods. Free flowing UCS compositions according to aspects of the disclosure may have CRH values of from about 55% to about 70%.

In certain aspects the fertilizer composition further includes one or more additives. The one or more additives may include, but is not limited to, an additional fertilizer, a micronutrient, a secondary nutrient, a trace element, a plant protection agent, a filler, an organic additive, or a combination thereof.

Examples of additional fertilizers include, but are not limited to, nitrogen fertilizers, phosphate fertilizers, alkaline fertilizers, potassium and/or magnesium containing fertilizers, and/or manure, and/or secondary nutrients, and/or trace elements. Examples of nitrogen fertilizers include organic fertilizer containing nitrogen, such as methylene urea, crotonylidene diurea, oxamide, melamine, substituted triazones, ethylene diurea, triuret, and any mixtures of thereof. For example, the other fertilizers can additionally contain urea or nitrogen, potassium, phosphorus, and/or magnesium in the form of inorganic salts, or mixtures thereof. Easily soluble nitrogen components are, for example, ammonium nitrate, ammonium sulfate, or urea. Other salts that can be used are, for example, monoammonium phosphate, diammonium phosphate, potassium sulfate, potassium chloride, magnesium sulphate, calcium superphosphate, disodium hydrogen phosphate, ferric chloride, manganous chloride, calcium chloride, magnesium phosphate, ammonia, and potassium oxide. The other fertilizers can contain single-nutrient, multi -nutrient, and other possible fertilizer ingredients, for example, which contain nutrients such as nitrogen, potassium, or phosphorus, individually or in combination. In some instances, the nutrients are in the form of their salts. Examples of these are nitrogen and phosphorous fertilizers (NP), nitrogen and potassium fertilizers (NK), potassium and phosphorous fertilizers (PK), and nitrogen, phosphorus, and potassium fertilizers (NPK), lime nitrate of ammonium, ammonia sulfate, ammonia sulfa-nitrate, and urea.

Examples of secondary nutrients include, but are not limited to, Ca, S, and B. Trace elements, for example

selected from among Fe, Mn, Cu, Zn, Mo, or mixtures thereof, can also be present for example in the form of inorganic salts. The amounts of secondary nutrients or trace elements in the mixed fertilizer can, for example, be chosen in the range from 0.5 to 5 wt. %, based upon the total weight of the mixed fertilizer. [0051] Examples of plant protection agents include but are not limited to insecticides, fungicides, growth regulators, nitrification inhibitors, and any mixtures of them. Examples of fillers include but are not limited to clay, peat, etc.

Various combinations of elements of this disclosure are encompassed by this disclosure, e.g., combinations of elements from dependent claims that depend upon the same independent claim.

**Aspects of the Disclosure**

In various aspects, the present disclosure pertains to and includes at least the following aspects.

Aspect 1. A urea calcium sulfate (UCS) fertilizer granule comprising urea, calcium sulfate, and a calcium sulfate urea adduct, wherein the urea calcium sulfate (UCS) fertilizer granule is prepared by a continuous process comprising:

(a) combining urea, calcium sulfate, and water to form an aqueous slurry, wherein the urea is solubilized in the aqueous slurry;
(b) mixing the aqueous slurry in a high shear mixing apparatus, wherein the high shear mixing apparatus applies a shear of at least 50,000/seconds to the aqueous slurry; and
(c) removing at least a portion of the water from the aqueous slurry to form the UCS fertilizer granule,

wherein the UCS fertilizer granule comprises at least 80% calcium sulfate urea adduct.

Aspect 2. The UCS fertilizer granule prepared according to the process of Aspect 1, wherein the process further comprises pre-grinding the calcium sulfate prior to step (a) of combining the urea, calcium sulfate, and water to form an aqueous slurry.

Aspect 3. The UCS fertilizer granule prepared according to the process of Aspect 2, wherein the pre-ground calcium sulfate has an average particle size of from about 100 micron ($\mu$m) to about 1 millimeter (mm).

Aspect 4. The UCS fertilizer granule prepared according to the process of any of Aspects 1 to 3, wherein the calcium sulfate is hydrated calcium sulfate or anhydrous calcium sulfate.

Aspect 5. The UCS fertilizer granule prepared according to the process of any of Aspects 1 to 4, wherein the high shear mixing apparatus comprises a rotor-stator mixer, a colloid mill, a homogenizer, a microfluidizing processor, an ultrasonicator, or a combination thereof.

Aspect 6. The UCS fertilizer granule prepared according to the process of any of Aspects 1 to 5, wherein step (b) of mixing the aqueous slurry in a high shear mixing apparatus is performed at a temperature of less than 90 degrees Celsius (°C).

Aspect 7. The UCS fertilizer granule prepared according to the process of any of Aspects 1 to 6, wherein step (b) of mixing the aqueous slurry in a high shear mixing apparatus is performed for a time of less than one hour.

Aspect 8. The UCS fertilizer granule prepared according to the process of any of Aspects 1 to 7, wherein the granule has a particle size of from about 1 mm to about 4 mm.

Aspect 9. The UCS fertilizer granule prepared according to the process of any of Aspects 1 to 8, wherein step (c) of removing at least a portion of the water from the aqueous slurry comprises removing at least 99% of the water from the aqueous slurry.

Aspect 10. The UCS fertilizer granule prepared according to the process of any of Aspects 1 to 9, wherein step (c) of removing at least a portion of the water from the aqueous slurry comprises drying the aqueous slurry at a temperature of at least 80 °C.

Aspect 11. A fertilizer composition comprising a plurality of UCS fertilizer granules prepared according to the process of any of Aspects 1 to 10, wherein the fertilizer composition is free-flowing at room temperature.

Aspect 12. The fertilizer composition according to Aspect 11, wherein the fertilizer composition further comprises one or more additives.

Aspect 13. The fertilizer composition according to Aspect 12, wherein the one or more additives comprises an additional fertilizer, a micronutrient, a secondary nutrient, a trace element, a plant protection agent, a filler, an organic additive, or a combination thereof.

Aspect 14. A method for forming a fertilizer composition, wherein the fertilizer composition comprises a plurality of urea calcium sulfate (UCS) fertilizer granules comprising urea, calcium sulfate, and a calcium sulfate urea adduct, the method comprising:

(a) combining urea, calcium sulfate, and water to form an aqueous slurry, wherein the urea is solubilized in the aqueous slurry;

(b) mixing the aqueous slurry in a high shear mixing apparatus, wherein the high shear mixing apparatus applies a shear of at least 50,000/seconds to the aqueous slurry; and

(c) removing at least a portion of the water from the aqueous slurry to form the plurality of UCS fertilizer granules,

wherein the plurality of UCS fertilizer granules comprise at least 80% calcium sulfate urea adduct, and wherein the method is performed as a continuous process.

Aspect 15. The method according to Aspect 14, wherein the method further comprises pre-grinding the calcium sulfate prior to step (a) of combining the urea, calcium sulfate, and water to form an aqueous slurry.

Aspect 16. The method according to Aspect 15, wherein the pre-ground calcium sulfate has an average particle size of from about 100 micron (μm) to about 1 millimeter (mm).

Aspect 17. The method according to any of Aspects 14 to 16, wherein the calcium sulfate is hydrated calcium sulfate or anhydrous calcium sulfate.

Aspect 18. The method according to any of Aspects 14 to 17, wherein the high shear mixing apparatus comprises a rotor-stator mixer, a colloid mill, a homogenizer, a microfluidizing processor, an ultrasonicator, or a combination thereof.

Aspect 19. The method according to any of Aspects 14 to 18, wherein step (b) of mixing the aqueous slurry in a high shear mixing apparatus is performed at a temperature of less than 90 degrees Celsius (°C).

Aspect 20. The method according to any of Aspects 14 to 19, wherein step (b) of mixing the aqueous slurry in a high shear mixing apparatus is performed for a time of less than one hour.

Aspect 21. The method according to any of Aspects 14 to 20, wherein the granule has a particle size of from about 1 mm to about 4 mm.

Aspect 22. The method according to any of Aspects 14 to 21, wherein step (c) of removing at least a portion of the water from the aqueous slurry comprises removing at least 99% of the water from the aqueous slurry.

Aspect 23. The method according to any of Aspects 14 to 22, wherein step (c) of removing at least a portion of the water from the aqueous slurry comprises drying the aqueous slurry at a temperature of at least 80 °C.

Aspect 24. A fertilizer composition comprising a plurality of UCS fertilizer granules prepared according to the method of any of Aspects 14 to 23, wherein the fertilizer composition is free-flowing at room temperature.

Aspect 25. The fertilizer composition according to Aspect 24, wherein the fertilizer composition further comprises one or more additives.

Aspect 26. The fertilizer composition according to Aspect 25, wherein the one or more additives comprises an additional fertilizer, a micronutrient, a secondary nutrient, a trace element, a plant protection agent, a filler, an organic additive, or a combination thereof.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

It has been found that Scanning Electron Microscopy (SEM) imaging can provide an understanding of urea adduct conversion. In the SEM images, white portions represent unreacted gypsum, and dark grey/black portions represent unreacted urea. light grey portions represent the UCS adduct.

### Example 1 (Prior Art)

Solid urea granules and solid (unground) gypsum powder were drum granulated using steam injection in a conventional manufacturing process. An SEM image of the granule is shown in FIG. 2. The dark grey spots in the granule indicate large portions of unreacted urea. Adduct conversion was about 30% which is too low for long term product storage.

**Example 2 (Prior Art)**

In another conventional example, dissolved urea and solid (unground) gypsum were reacted in a CSTR system as a slurry before being pumped to a drum granulator and rotary dryer system. An SEM image of a granule formed according to this process is shown in FIG. 3; fewer dark grey, black and white portions indicate higher USC adduct conversion as compared to Example 1. Adduct conversion was 50-60%; product storage has been acceptable to date. Of note the UCS adduct is fully compatible with both unreacted urea and unreacted gypsum. Accordingly, even relatively low adduct conversion (such as in this example) can be relatively stable in storage as the adduct keeps the unreacted material separated, reducing post-manufacture reactions.

**Example 3 (Prior Art)**

In a further conventional example, slurry granulation of dissolved urea and solid gypsum was conducted in a laboratory setting. An SEM image of a granule formed from this method is shown in FIG. 4. There are very few dark and white spots in the image, indicating a high adduct conversion rate. In this example, adduct conversion was 75-80%.

**Example 4**

In this example - performed according to aspects of the disclosure - dissolved urea and solid (unground) gypsum were reacted in a lab-scale CSTR system. The slurry was mixed with an ultrasonicator. The resulting slurry was granulated using a pan-granulator and dried in an oven overnight at 105 °C. A granule formed from this process is shown in FIG. 5. From the image very few black/dark grey and white portions are evident, indicating high UCS conversion. In this example adduct conversion was about 85-87%.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

**1.** A urea calcium sulfate (UCS) fertilizer granule comprising urea, calcium sulfate, and a calcium sulfate urea adduct, wherein the urea calcium sulfate (UCS) fertilizer granule is prepared by a continuous process comprising:

(a) combining urea, calcium sulfate, and water to form an aqueous slurry, wherein the urea is solubilized in the aqueous slurry;
(b) mixing the aqueous slurry in a high shear mixing apparatus, wherein the high shear mixing apparatus applies a shear of at least 50,000/seconds to the aqueous slurry; and
(c) removing at least a portion of the water from the aqueous slurry to form the UCS fertilizer granule,

wherein the UCS fertilizer granule comprises at least 80% calcium sulfate urea adduct.

**2.** The UCS fertilizer granule prepared according to the process of claim 1, wherein the process further comprises pre-grinding the calcium sulfate prior to step (a) of combining the urea, calcium sulfate, and water to form an aqueous slurry.

**3.** The UCS fertilizer granule prepared according to the process of claim 2, wherein the pre-ground calcium sulfate has an average particle size of from about 100 micron (μm) to about 1 millimeter (mm).

**4.** The UCS fertilizer granule prepared according to the process of any of claims 1 to 3, wherein the calcium sulfate is

hydrated calcium sulfate or anhydrous calcium sulfate.

**5.** The UCS fertilizer granule prepared according to the process of any of claims 1 to 4, wherein the high shear mixing apparatus comprises a rotor-stator mixer, a colloid mill, a homogenizer, a microfluidizing processor, an ultrasonicator, or a combination thereof.

**6.** The UCS fertilizer granule prepared according to the process of any of claims 1 to 5, wherein step (b) of mixing the aqueous slurry in a high shear mixing apparatus is performed at a temperature of less than 90 degrees Celsius (°C).

**7.** The UCS fertilizer granule prepared according to the process of any of claims 1 to 6, wherein step (b) of mixing the aqueous slurry in a high shear mixing apparatus is performed for a time of less than one hour.

**8.** The UCS fertilizer granule prepared according to the process of any of claims 1 to 7, wherein the granule has a particle size of from about 1 mm to about 4 mm.

**9.** The UCS fertilizer granule prepared according to the process of any of claims 1 to 8, wherein step (c) of removing at least a portion of the water from the aqueous slurry comprises removing at least 99% of the water from the aqueous slurry.

**10.** The UCS fertilizer granule prepared according to the process of any of claims 1 to 9, wherein step (c) of removing at least a portion of the water from the aqueous slurry comprises drying the aqueous slurry at a temperature of at least 80 °C.

**11.** A fertilizer composition comprising a plurality of UCS fertilizer granules prepared according to the process of any of claims 1 to 10, wherein the fertilizer composition is free-flowing at room temperature.

**12.** The fertilizer composition according to claim 11, wherein the fertilizer composition further comprises one or more additives.

**13.** The fertilizer composition according to claim 12, wherein the one or more additives comprises an additional fertilizer, a micronutrient, a secondary nutrient, a trace element, a plant protection agent, a filler, an organic additive, or a combination thereof.

**14.** A method for forming a fertilizer composition, wherein the fertilizer composition comprises a plurality of urea calcium sulfate (UCS) fertilizer granules comprising urea, calcium sulfate, and a calcium sulfate urea adduct, the method comprising:

(a) combining urea, calcium sulfate, and water to form an aqueous slurry, wherein the urea is solubilized in the aqueous slurry;
(b) mixing the aqueous slurry in a high shear mixing apparatus, wherein the high shear mixing apparatus applies a shear of at least 50,000/seconds to the aqueous slurry; and
(c) removing at least a portion of the water from the aqueous slurry to form the plurality of UCS fertilizer granules,

wherein the plurality of UCS fertilizer granules comprise at least 80% calcium sulfate urea adduct, and wherein the method is performed as a continuous process.

**15.** The method according to claim 14, wherein the method further comprises pre-grinding the calcium sulfate prior to step (a) of combining the urea, calcium sulfate, and water to form an aqueous slurry.

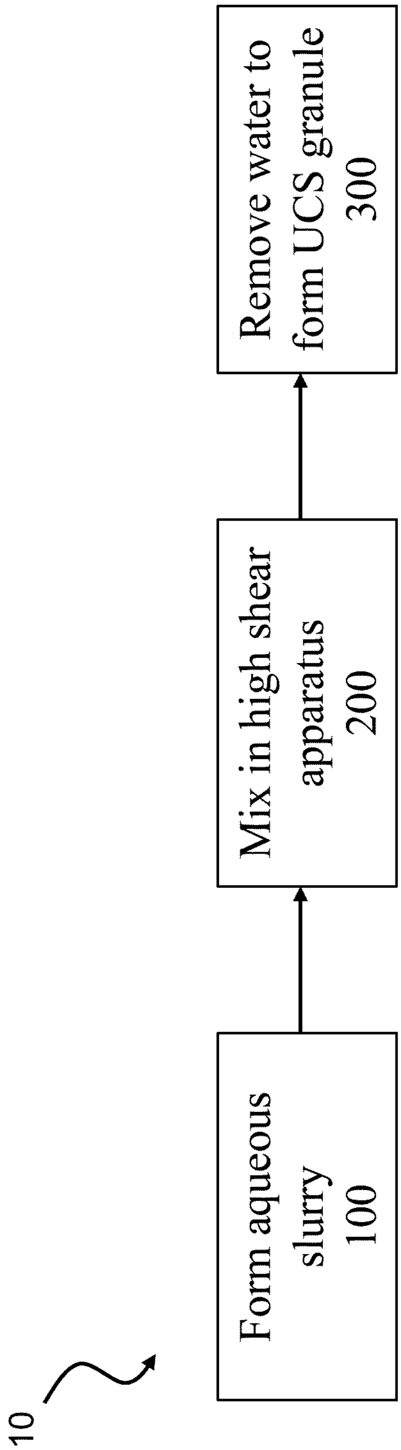
10
Form aqueous slurry 100
Mix in high shear apparatus 200
Remove water to form UCS granule 300

FIG. 1A

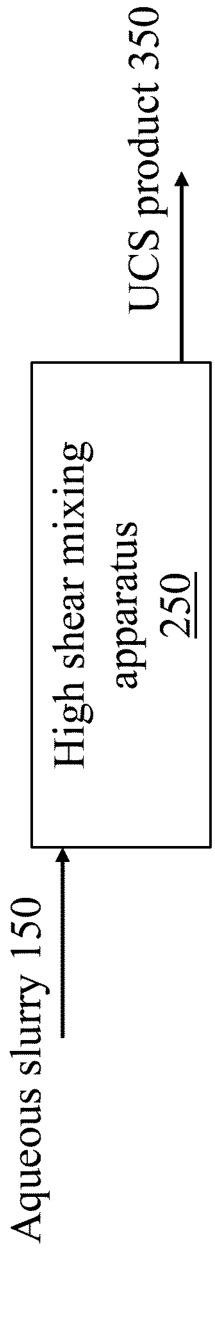
Aqueous slurry 150
High shear mixing apparatus 250
UCS product 350

FIG. 1B

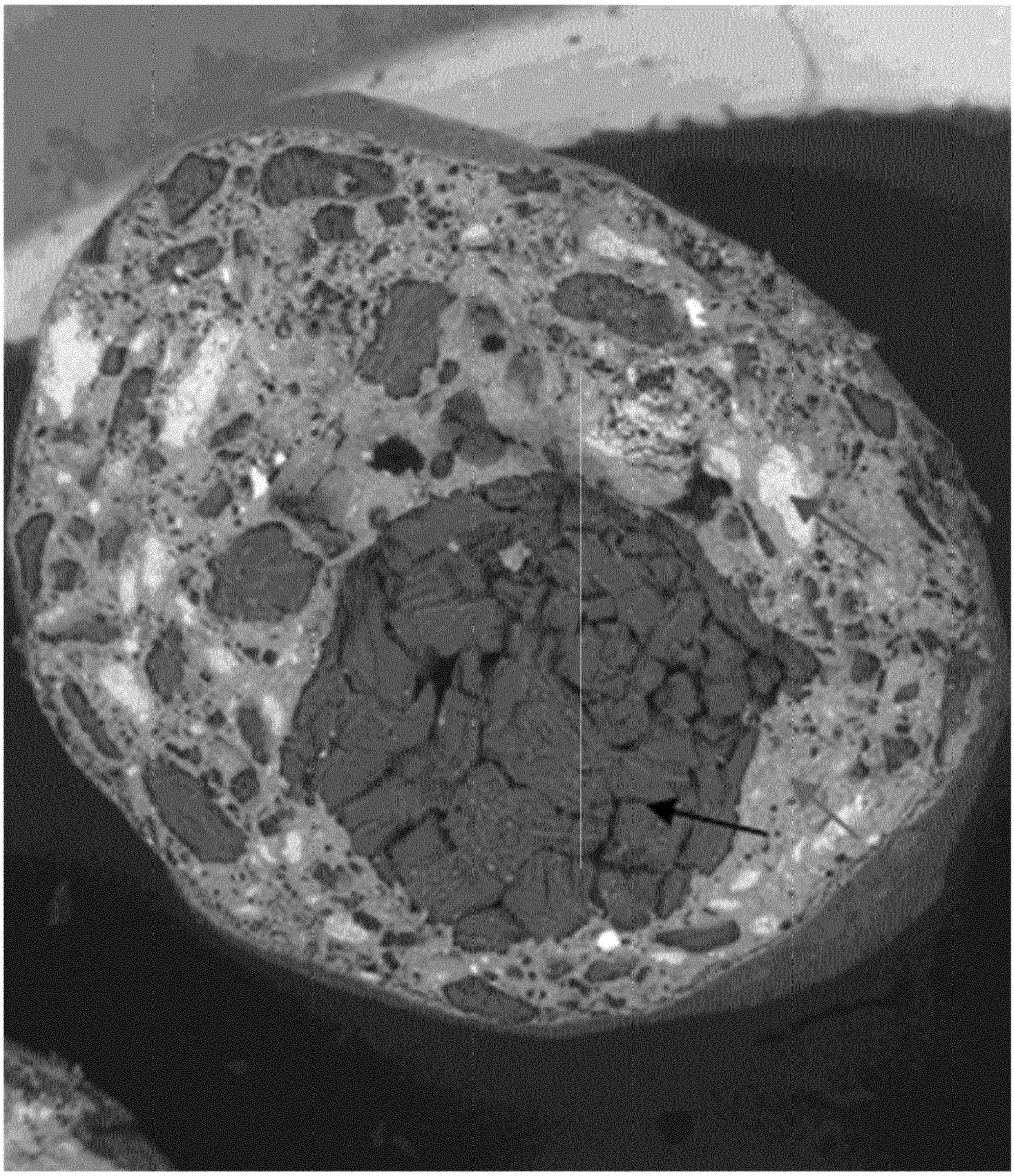

FIG. 2 (Prior Art)

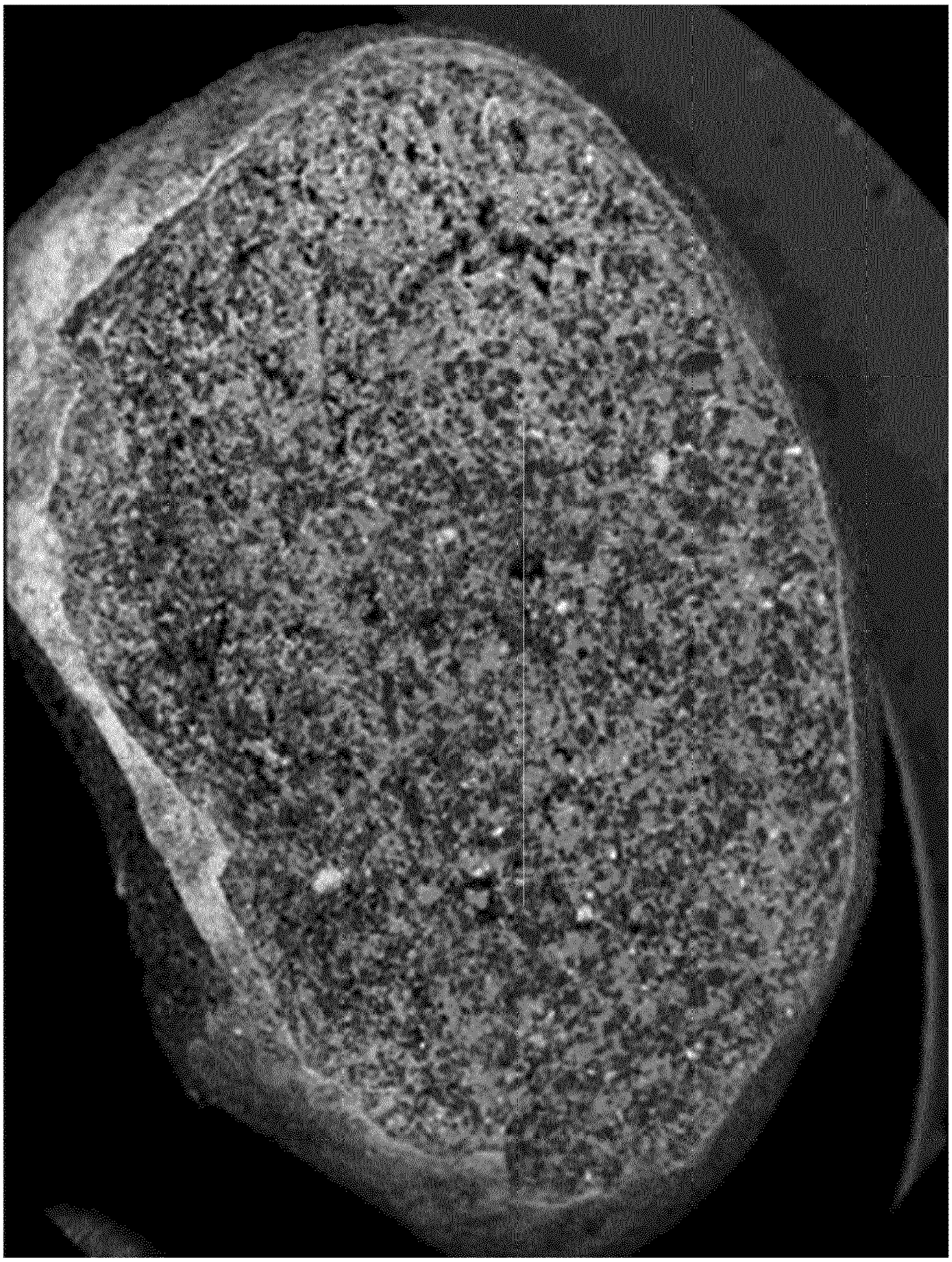

FIG. 3 (Prior Art)

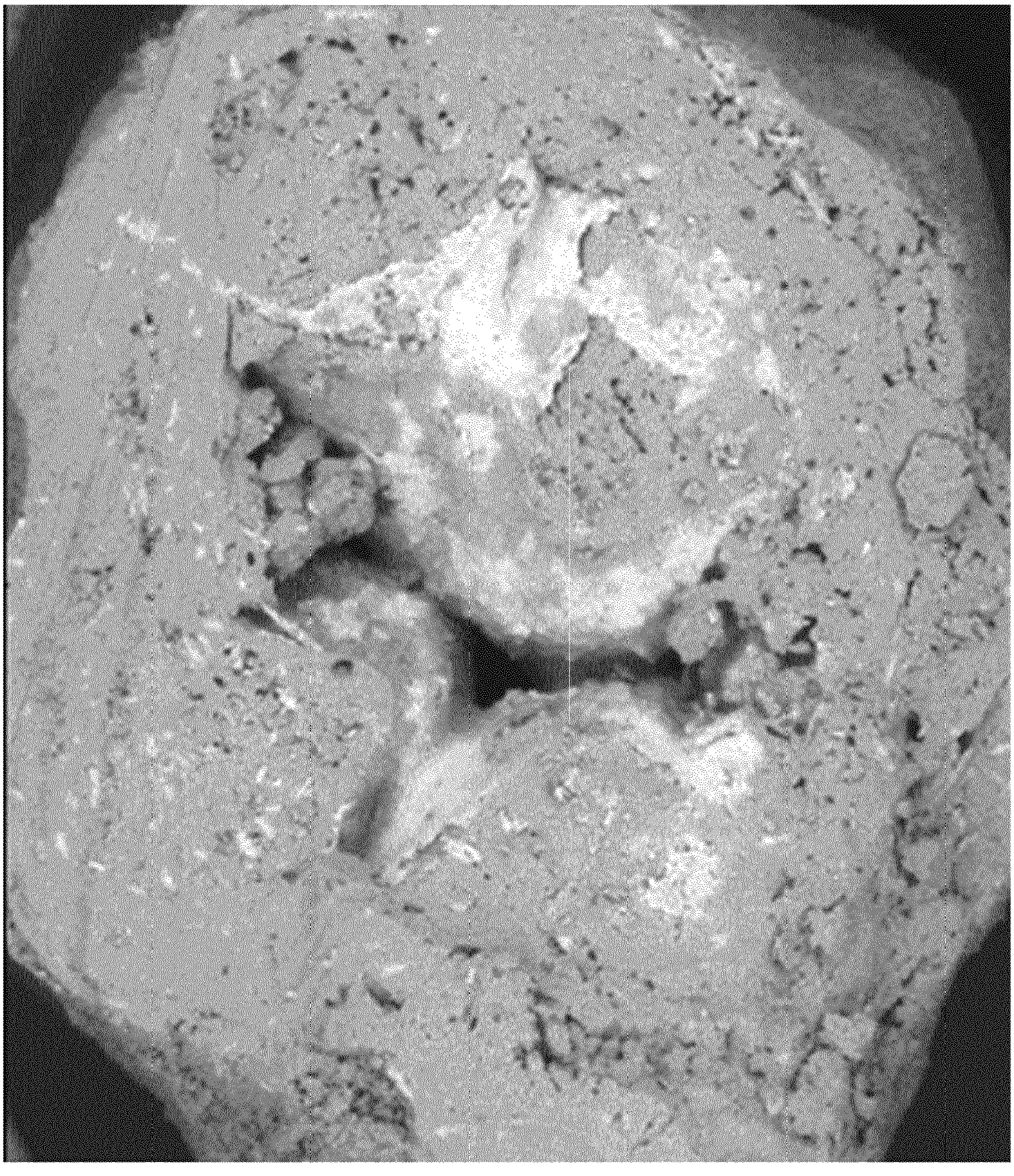

FIG. 4 (Prior Art)

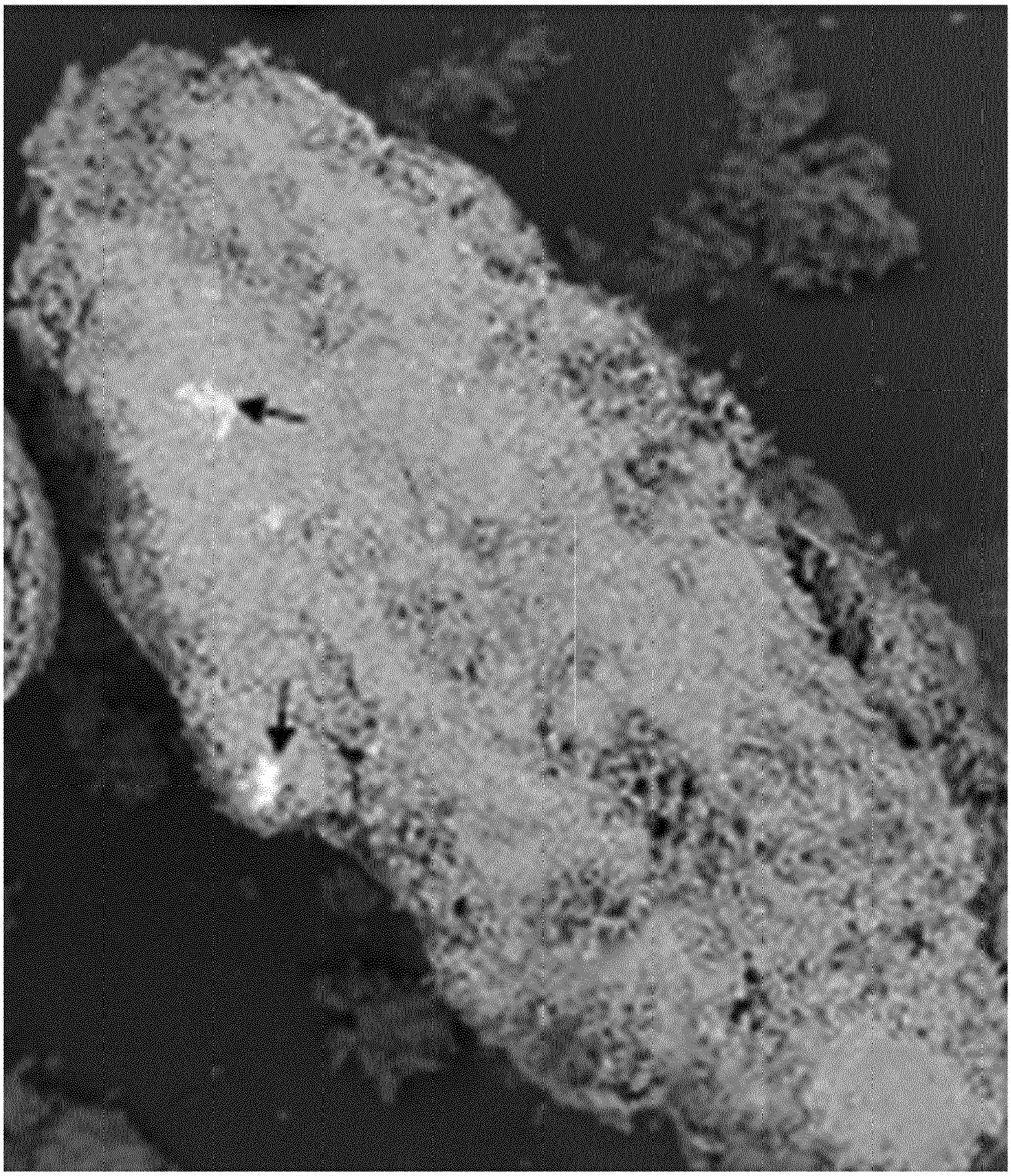

FIG. 5

Europäisches Patentamt
European Patent Office
Office européen des brevets

# EUROPEAN SEARCH REPORT

Application Number
EP 21 20 8978

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2021/064488 A1 (SABIC GLOBAL TECHNOLOGIES BV [NL]) 8 April 2021 (2021-04-08) * paragraph [0011] * * paragraph [0012] * * paragraph [0013] * * paragraph [0015] * * paragraph [0021] * * paragraph [0073] * * paragraph [0076] - paragraph [0077] * ----- | 14,15 | INV. C05C9/00 C05G5/12 C05D3/00 C05D3/02 |
| X<br>Y | US 2 074 880 A (WHITTAKER COLIN W ET AL) 23 March 1937 (1937-03-23) * page 1, line 7 - page 2, line 10 * ----- | 1-13<br>14,15 | |
| X | MALINOWSKI PRZEMYSLAW ET AL: "Utilization of waste gypsum in fertilizer production", POLISH JOURNAL OF CHEMICAL TECHNOLOGY, vol. 16, no. 1, 1 March 2014 (2014-03-01), pages 45-47, XP055916986, PL ISSN: 1509-8117, DOI: 10.2478/pjct-2014-0008 * page 45, right-hand column * * page 46, right-hand column * ----- | 1-13 | TECHNICAL FIELDS SEARCHED (IPC)<br>C05C<br>C05G<br>C05D |
| A | FR 2 676 730 A1 (SCHWOB YVAN [FR]) 27 November 1992 (1992-11-27) * the whole document * ----- | 1-15 | |
| A | DATABASE WPI Week 201369 Thomson Scientific, London, GB; AN 2013-Q42996 XP002806363, & CN 103 086 810 A (GUAN B) 8 May 2013 (2013-05-08) * abstract * ----- | 1-15 | |

The present search report has been drawn up for all claims

| Place of search | Date of completion of the search | Examiner |
|---|---|---|
| The Hague | 3 May 2022 | Rodriguez Fontao, M |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 21 20 8978

This annex lists the patent family members relating to the patent documents cited in the above-mentioned European search report. The members are as contained in the European Patent Office EDP file on
The European Patent Office is in no way liable for these particulars which are merely given for the purpose of information.

03-05-2022

| Patent document cited in search report | Publication date | Patent family member(s) | Publication date |
|---|---|---|---|
| WO 2021064488 A1 | 08-04-2021 | AU 2020358923 A1 | 07-04-2022 |
| | | WO 2021064488 A1 | 08-04-2021 |
| US 2074880 A | 23-03-1937 | NONE | |
| FR 2676730 A1 | 27-11-1992 | NONE | |
| CN 103086810 A | 08-05-2013 | NONE | |

EPO FORM P0459

For more details about this annex : see Official Journal of the European Patent Office, No. 12/82